# EUROPEAN PATENT APPLICATION

(11) **EP 1 515 087 A2**
(43) Date of publication of application: **16.03.2005**
(21) Application number: 04021437.1
(22) Date of filing: 09.09.2004
(51) Int. Cl.: F21V 33/00, F21S 9/03, H01L 31/048, E01F 9/06

(54) **Luminous sun fed brick**

(30) Priority: 12.09.2003 IT MI20031752
(71) Applicant: Lombardi, Giuseppe, 27049 Stradella (PV) (IT)
(72) Inventor: Lombardi, Giuseppe, 27049 Stradella (PV) (IT)
(74) Representative: Beneduce, Gianna

(57) **Abstract**

A luminous sun fed brick, of watertight manufacture, suitable to be used also in carriageable zones and in submerged conditions, is described.

## Description

The object of the present invention consists of a luminous sun fed brick, of watertight manufacture and suitable also to be used in carriageable zones.

More particularly, the luminous brick of the invention allows to break the darkness by emitting a continuous or blinking light, of various colour, also in a scenic manner, signalling in an adequate manner the areas of interest without any consumption of power.

The brick of the invention is suitably arranged so as to be automatically or, in case, manually, switched on and off according to the level of the ambient light where it is placed and it is also perfectly integrable, either dimensionally or aesthetically, in the pavings of self-locking blocks and watertight also in submerged conditions.

### State of the art

It is known the use of solar photovoltaic cells or panels that absorb, during the day, the solar energy, transforming it into power that is stored in an accumulator, to be later used as it is, generally during the night, to feed a luminous source or the like. Said luminous sources can be activated automatically or manually and find use specially as in lighting of avenues, parking areas and as signals of obstacles or danger zones and the like.

Also are known luminous sources fed by solar panels in the shape of brick, which have a limited resistance to static or dynamic loads, such as vehicle knocks or sharp brakings, of a certain extent and scantily suitable to be installed in outside zones exposed to weather inclemencies. Among them, a solar panel brick is included which is disclosed in the United States Patent n° 6,339,188 wherein, particularly, the presence of the screws, used for its assembly, makes its outside structure easily subject to crackings when subjected to high static or dynamic loads, as well as for just the thermic expansion of the paving as a whole, during the day-night transients. Consequently, the presence of said screws makes it so that humidity or water may easily penetrate the brick with possible damages to the electronic/electric internal circuit and a bad brick service.

Also the arrangement of the gasket shown in said patent, which is further pressed by vehicle loads, if any, which could drive/stop on the brick, could easily cause the gasket damage so letting the humidity or the water penetrate inside the brick with consequent bad service thereof.

### Description of the invention

The luminous sun fed brick object of the invention, intends to represent an improvement among similar devices known at present. It shows a very strong and compact structure, that makes it suitable to bear high static or dynamic loads, up to 6.5 Nm/s, and, therefore, to be used also in zones frequently subject to trampling and/or carriageable; it is assembled in such a way to guarantee a totally watertight structure, suitable therefore to be used also in submerged conditions like, for example, inside basins and swimming pools.

Said sun fed brick or solar brick can have various sizes and shapes and can emit continuous or blinking light also in various colours although working with very low voltages, even lower than 12 V. It is perfectly integrable, either from a dimensional or aesthetical point of view, in pavings of self-locking blocks made of concrete, natural stone or other paving so as to be distinguished from the other paving components among which it is arranged, only after a careful observation.

Said solar brick is also advantageosuly usable in other building manufactures like, for example, road girders, walls, dissuaders, inside or outside the buildings as well as in gardens, parks, fountains and basins where it can be placed with or without projections out of the trampling level. It can be suitably tuned so as to be automatically switched on and off according to the luminosity of the ambient where it is arranged or, alternately, it can be provided with a switch which manually allows its switching on and off.

The solar brick of the invention essentially consists of an outside housing, in different shapes, which contains inside one or more watertight electronic/electric circuit, a suitable energy accumulator, one or more diodes, according to the accumulator capacity, a photo-voltaic panel and a transparent screen, integral with the housing, to allow the light in and out, placed on one or more sides of said housing. The solar brick of the invention in an embodiment having transparent screens placed on more than one of the housing sides, allows to satisfy the requirement of a luminous signal, contemporary on, for example, two sides of a manufacture, like a girder, a dissuader etc.

In an embodiment of the brick of the invention, the accumulator, generally consisting of a battery, can be advantageously replaced by a condenser: if that is the case the use life time of the brick is about 7-10 years, while, in the case of a battery use, this one needs to be replaced every 2-3 years.

The above disclosed characteristics make the solar brick of the invention a product easy to be installed and kept in working efficiency: it does not need any maintenance for the luminous sources which have a life time of about 80,000 hours; the only requested intervention, as already said, regards the battery replacement every 2-3 years or, should a condenser be used, the replacement of the brick itself every 7-10 years.

The solar brick object of the invention is in the following described in details with reference to the attached drawings where some preferred, but not limiting, embodiments of it are shown. In particular:
Figure 1 shows an embodiment of the solar brick of the invention in an axonometric exploded view from the top. In the two circles, details of the couplings between the matching elements of the brick are shown;
Figure 2 shows the brick of Figure 1 in an axonometric exploded view from the bottom;
Figure 3 shows the brick of Figure 1 in an axonometric view from the top, from an angle different from the one of Figure 1;
Figure 4 shows another embodiment of the brick of the invention in a cross sectional view, along the line A-A of the following Figure 5;
Figure 5 shows the brick of Figures 1 and 3 in a top view;
Figure 6 shows a further embodiment of the solar brick according to the invention in an axonometric exploded view from the top, from the same angle of Figure 3;
Figure 7 shows the brick of Figure 6 in an axonometric view from the bottom;
Figure 8 shows again a further embodiment of the solar brick according to the invention in an axonometric exploded view from the bottom;
Figure 9 shows the solar brick of Figure 8 in an axonometric exploded view from the top;
Figure 10 shows the diagram of a suitable electronic/electric circuit capable to operate the running of the solar brick according to the invention.

In the above Figures the solar brick components of the specifc embodiments shown consist of: the outside housing 1 having a parallelepiped shape, the transparent screen 2 of suitable material, like glass or plastic, placed on the housing upper side, capable to let the solar light through towards the underneath photo-voltaic panel, the photo-voltaic panel 3 which transforms the solar energy in power, which is then conveniently stored, the two diodes 4, a suitable accumulator for storing and subsequent power supply, like a battery 5 or a condenser 11, the electronic/electric circuit 6 which operates the accumulation/release of power during the correspondent day/night periods and the transient periods for the automatic switching on/off according to the ambient luminosity, the watertight gaskets 7, the edge 8 having the reflecting surfaces 8', the spacers 9 and the two pins 10, integral with the housing 1, and placed in correspondence with an equal number of non-through slots 12, performed in the lower part of the transparent screen 2, inside of which they stick so preventing the relative movement between the housing 1 and the tranparent screen 2 of the solar brick.

The edge 8 has the purpose to protect the transparent screen 2 from the side stresses due to the settlement and sinking of a suitable material like, for example, sand or small stones, which are normally used, as well as from the huge stresses due to the thermic expansion of the paving as a whole which could bring the screen transparent material to break and crack in a short time if not protected by side walls.

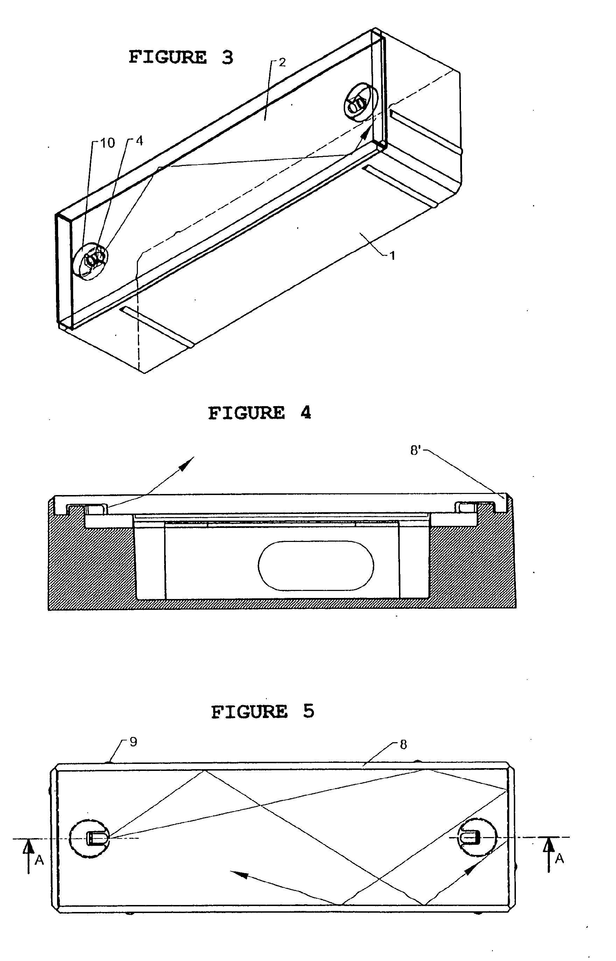

The inside surfaces 8' of edge 8 reflect, making it widely uniform, the light emitted by the diodes 4, that, otherwise, would be confined only to the sames. The screen 2 behaves therefore like an optical fibre thus improving its luminosity and reducing the waste of the energy necessary for the illumination. In Figures 4 and 5, the possible reflection/ refraction paths of the luminous rays, indicated by lines and arrows, either inside or towards the transparent screen 2 outside of the brick, are indicated.

The spacers 9 serve to create a suitable gap, between the solar brick and the sorrounding paving elements, wherein are inserted at the laying, for example, sand and small stones.

The transparent screen 2 and the housing 1 are each other firmly integral by gluing, welding or other known technique.

The pins 10 prevent the relative movements between the two elements and, at the same time, they house the luminous diodes 4. There is, therefore, no mechanical joint member, like screws and the like.

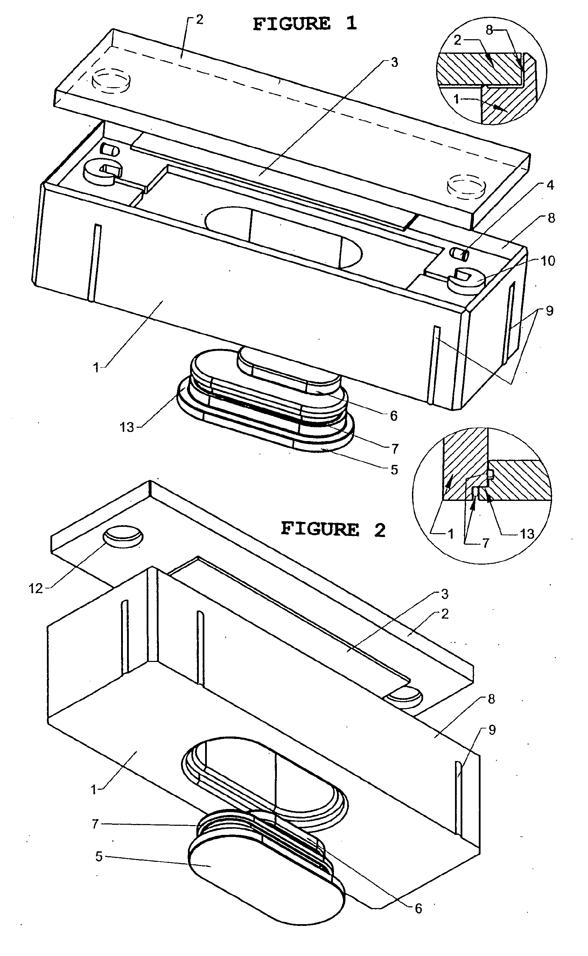

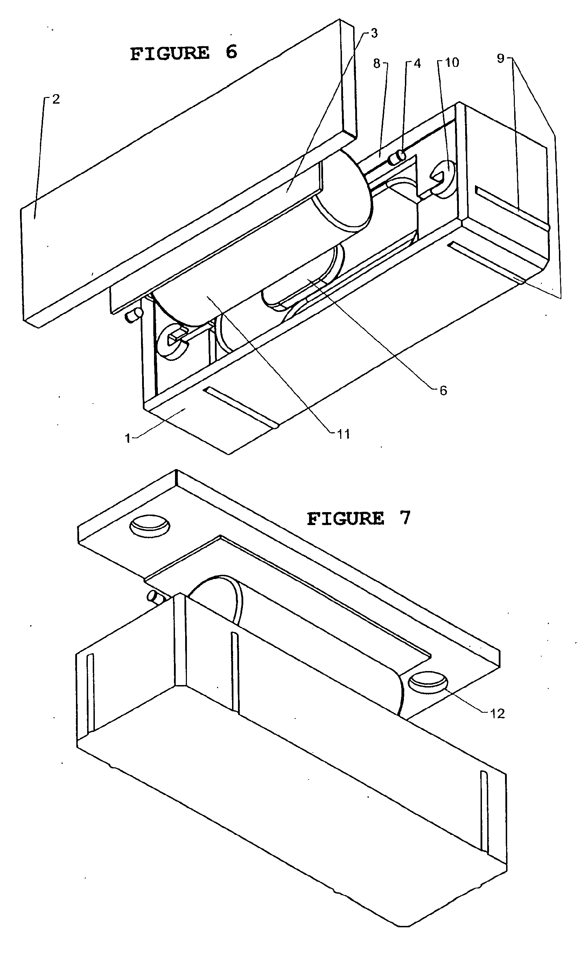

In Figures 1 and 2 a solar brick is shown wherein the energy accumulator consists of the battery 5, while in Figures 6, 7, 8 and 9 the energy accumulator consists of the condenser 11.

In the above described embodiments, indipendently from the specific used energy accumulator, the battery or the condenser can, however, be each other replaced according to the life time requirements of the solar brick. This is specifically displayed in Figure 10 wherein a battery 5 or a condenser 11 can be, indifferently, used.

The access to the inside brick components, particularly to the group in charge of the energy storing and the electronic/electric circuit 6, are maintained in watertight conditions by suitable gaskets 7. Said gaskets 7 are protected by a suitable abutting surface 13 which prevents the same from being subjected to a further compression due to static or dynamic loads, if any, on the brick. In case, the inside above mentioned components can be, individually, made watertight by an epoxy resin or similar coating.

In Figure 6 a solar brick embodiment is shown, in which the photo-voltaic panel energy is sent to the condenser 11. This brick is perfectly sealed because it does not need any maintenance during its life.

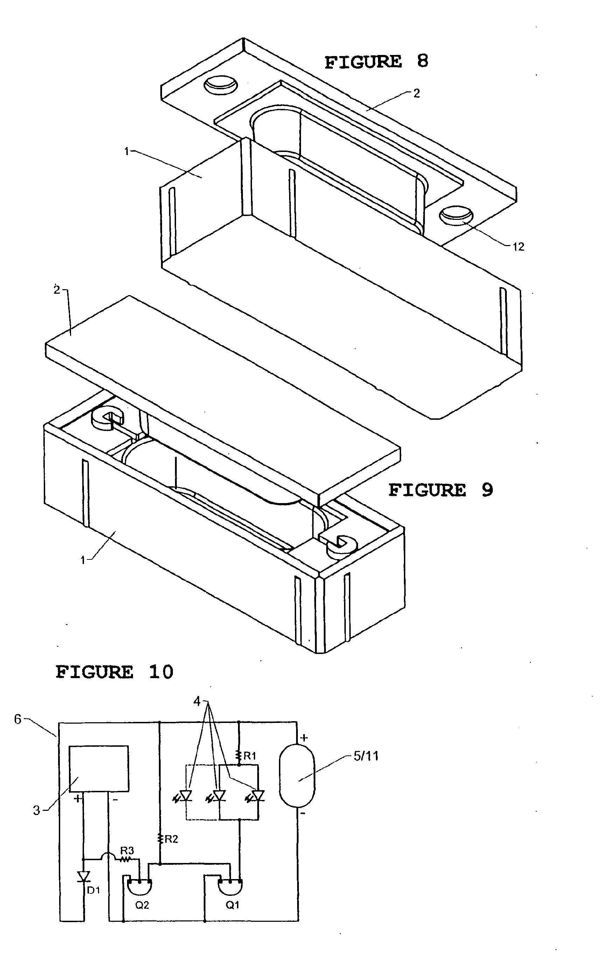

In Figure 8 a brick embodiment of the invention is shown in which the photo-voltaic panel 3, the electronic/electric circuit 6 and what else is necessary to its running, are incorporated in the transparent screen 2 made watertight.

In Figure 10 the brick electronic/electric circuit 6 of the invention is shown in details: in it, particularly, the photo-voltaic panel 3, the diodes 4 (LED) and the energy accumulator 5 or 11, battery or condenser respectively, are displayed. The R1, R2 and R3 resistances, the Q1 and Q2 transistors and the D1 diode are also displayed. When in the ambient, where the brick of the invention is installed, there is light (day), the photo-voltaic panel 3 excites the Q2 transistor which closes the circuit taking the voltage off to the Q1 transistor which remains open: the diodes 4 (LED) are switched off and all the power produced charges the accumulator 5/11. When the ambient, where the brick is installed, is dark, the Q2 transistor is not excited and remains open. The accumulator 5/11, which was charged during the day, supplies energy which excites the Q1 transistor with consequent circuit closing: the power runs through the diodes 4 (LED) which light up.

When the voltage of the accumulator 5/11 decreases, Q1 transistor lowers the current intensity supplied to diodes 4 (LED), that allows a considerable increase of the luminous emission life time.

With a suitable calibration of the R1, R2 and R3 resistances the luminous flux regulation of the diodes 4 (LED) is obtained.

The materials usable for the solar brick manifacture according to the invention can be various, provided that they are compatible with the specific use requested to the brick.

Particularly, for the housing 1, thermohardening filled material, thermoplastic material, suitable treated metal and suitable waterproof cement can be used. For the gaskets silicone rubber or EPDM can be used.

## Claims

1. A sun fed brick having an automatic or manual switching on/off system, and being of a completely watertight manufacture, resistant to strong static and dynamic loads, perfectly dimensionally and aesthetically integrable in the paving or in the wall wherein it is placed and suitable to the illumination and to continuous or discontinous signalling, in indoor and outdoor ambients carriageable or not carriageable, even in submerged conditions, which consists of an outside housing 1, one or more transparent screens 2, optionally coloured, for the light entrance and exit, a photo-voltaic panel 3, one or more diodes 4, a suitable energy accumulator and an electronic/electric circuit 6, watertight gaskets 7, said housing 1 being provided on its outside sides with suitable spacers 9 and being shaped, on the side carrying the transparent screen, with a suitable edge 8 having reflecting surfaces 8' and also being provided with one or more suitable pins 10, the transparent screen 2, integral with the housing 1, having inside suitable non-throught slot/s 12 placed in correspondence and in an equal number of the pin/s 10, and being placed on one or more surfaces of the brick housing 1, said watertight gaskets 7 being placed around the group energy accumulator and electronic/electric circuit 6 and being protected by a suitable abutting surface 13.

2. The sun fed brick, according to claim 1, wherein the energy accumulator consists of the battery 5.

3. The sun fed brick, according to claim 1, wherein the energy accumulator consists of the condenser 11.

4. The sun fed brick, according to the previous claims, wherein the diode/s 4, the pin/s 10 and the corresponding non-throught slot/s 12 are in number of one or more, being the diode/s 4 housed inside the suitably shaped pin/s 10.

5. The sun fed brick, according to claim 4, wherein the pin/s 10 are U shaped.

6. The sun fed brick, according to the previous claims, wherein one transparent screen 2 is placed on the brick upper side and another transparent screen is placed on one of its lateral sides.

7. The sun fed brick, according to the previous claims, wherein the photo-voltaic panel 3 and the electronic/electric circuit 6, the diode/s 4 and the accumulator 5/11 are incorporated in the transparent screen/s 2.
